# EUROPEAN PATENT APPLICATION

(11) **EP 2 172 412 A1**
(43) Date of publication of application: **07.04.2010**
(21) Application number: 08425647.8
(22) Date of filing: 06.10.2008
(51) Int. Cl.: B66C 13/08, A61G 1/04

(54) **Stretcher stabilizing device**

(71) Applicant: Regione Autonoma Valle d'Aosta Direzione Protezione Civile, 11020 Saint-Christophe (AO) (IT)
(72) Inventor: Meroi, Silvano, 11010 Gignod (AO) (IT)
(74) Representative: Spadaro, Marco

(57) **Abstract**

A stabilizing device for stretchers comprises propulsion means connected to the stretcher by suitable connection means, and disposed so as to be able to generate a thrust directed towards the direction of an axis which is substantially perpendicular to an longitudinal axis of the stretcher.

## Description

The present invention refers to a stabilizing device for stretchers and suspended bodies in general.

Typical rescue operations, e.g. in mountain environments, are usually performed by using helicopters provided with stretchers to which rescued people are put.

Such stretchers are normally fixed externally to the helicopter by means of a winch, allowing to move the stretcher vertically, thus moving it nearer to the ground during the rescue operations and then bringing it back near to the former.

It should be comprised that when a rescued person is loaded on the stretcher, the latter is raised from the ground and brought close to the cockpit of the helicopter remaining in flight during this operation. As a consequence, the stretcher could also be kept suspended also for its transportation towards the place of rescue.

Therefore, it could be easily understood how during these steps the patient is particularly subject to rotations and rocking generated by the air flow of the main rotor, that can be dangerous, or anyhow annoying, for the rescued person.

In order to overcome this problem, Japanese Patent JP 09-309687 describes a stabilizer for suspended bodies fixed between the winch and the stretcher and comprising a weight connected to a motor. The motor generates an elastic strength stopping the rotation of the stretcher by the rotations of the weight. Accordingly, when the stretcher is raised, it remains steady relative to the helicopter.

Nevertheless, this solution requires to operate on the wire of the winch and, therefore, it can be hardly controlled. Moreover, in general, it does not improve significantly the stability of the stretcher during the various steps of the rescue.

Hence, the technical problem underlying the present invention is to provide a stabilizing device for stretchers allowing to overcome the drawbacks mentioned above with reference to the known art.

Such a problem is solved by the stabilizing device for stretchers and suspended bodies in general according to claim 1 and by the stretcher comprising the same according to claim 13.

The present invention provides several relevant advantages. The main advantage lies in that device could be easily and precisely automatically operated, so as to guarantee the greatest safety to the person carried.

Moreover, the device according to the present invention allows to assure an optimal stability to the stretcher during all the phases of rescue.

Other advantages, features and the operation modes of the present invention will be made apparent from the following detailed description of some embodiments thereof, given by way of a non-limiting example. Reference will be made to the figures of the annexed drawings, wherein:
figure 1 is a perspective view showing the stabilizing device according to the present invention;
figure 2 is a side view of the device of figure 1;
figure 3 is a perspective view showing the stabilizing device according to the present invention installed on a stretcher; and
figure 4 is a view showing the stretcher provided with the present stabilizing device during their use on a helicopter for mountain rescue.

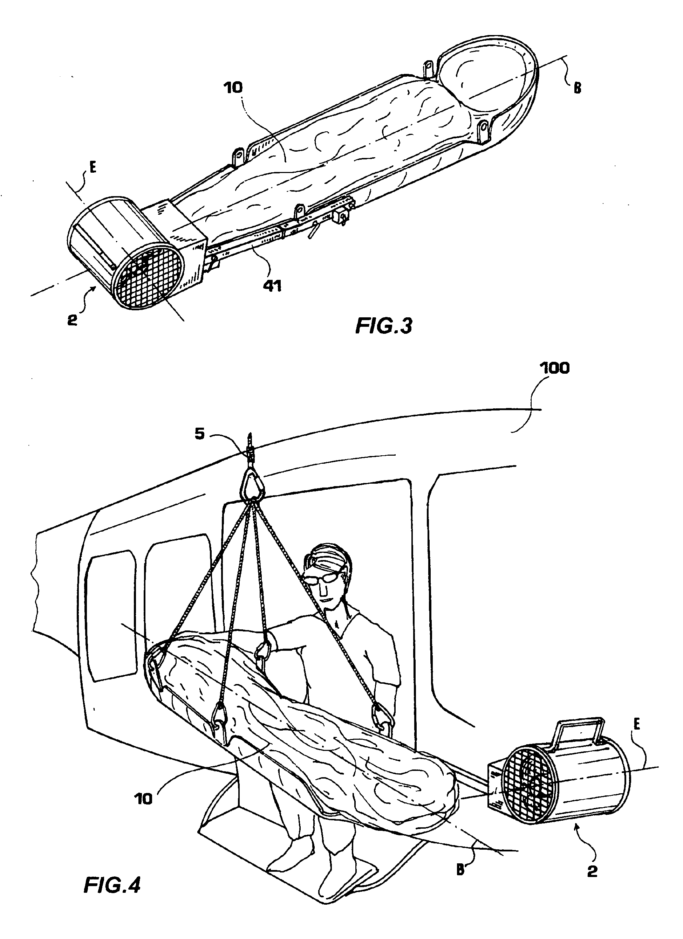

With reference initially to figure 4, a stabilizing device for stretchers 10 and suspended bodies in general, is shown with the reference number 1. In the following, it will be described with reference to the use in helicopters 100 for mountain rescue, but it is evident that also different uses of the device 1 could be foreseen on other suspended bodies, e.g. materials to be carried or platforms for aerial filming or photo. Anyhow, the stability the device 1 allow to achieve is particularly advantageous for uses related to the rescuing of people.

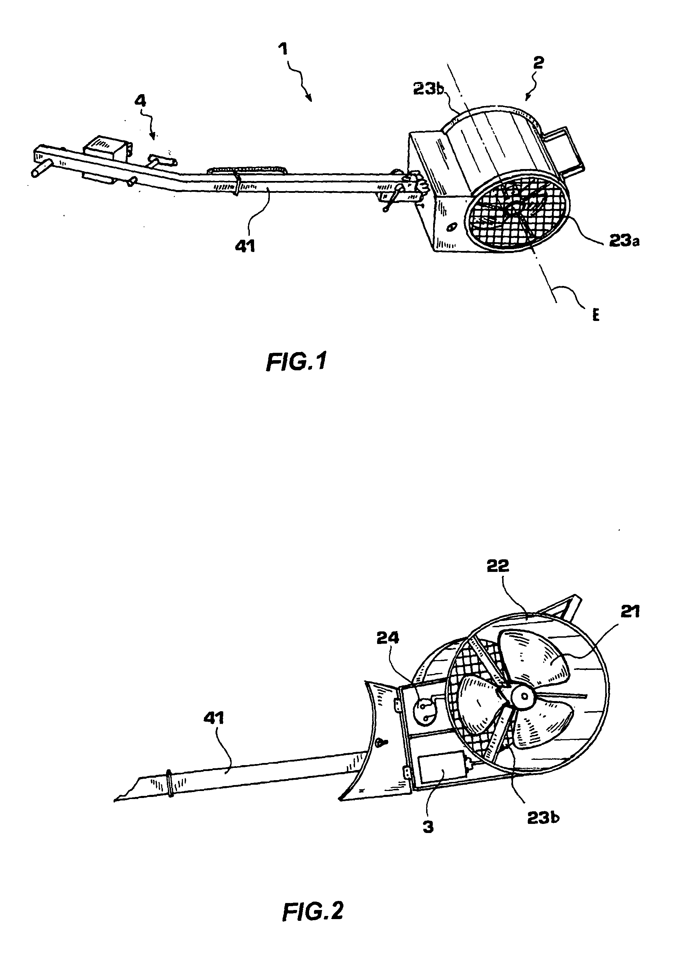

With reference then to figures 1 and 2, the device 1 comprises propulsion means 2.

More precisely, the propulsion means 2 comprises a propeller 21 housed within a cylindrical case 22.

In particular, the axis of rotation of the propeller 21 correspond to the one of the cylindrical case 22. The cylindrical case 22 is provided with grates 23a and 23b at its ends, corresponding to the bases of the cylinder defining the case 22. These grates 23a and 23b at the same time allow the flow of air, prevent incidental foreign body to enter the case 22 and protect the operator from incidental risks caused by the motion of the propeller 21.

In fact, the propeller 21 is connected to an electrical motor, preferably of the brushless type, not shown in figure, that allows to rotate the propeller. Accordingly, it will be possible to create an air flow between the grates, yielding a thrust on the device 1. The direction of such thrust will be defined by the direction of an axis of rotation E of the propeller 21 and by its sense of rotation. In fact, it should be noted that the propeller 21 is made such that it is reversible and thus it can be used in both the senses of rotation.

The motor is operated by a battery 24, shown in figure 2, allowing to avoid any electrical connection with the cockpit of the helicopter 100, so as to allow an easier motion of the stretcher 10.

With reference to figures 3 and 4, the device 1 also comprises connection means 4 to the stretcher 10, allowing to fix the device 1 in a such way that the axis E of the propeller 21 is substantially normal to a longitudinal axis B of the stretcher 10, and placed at an end thereof. Hence, such connection means 4 could be made, e.g. by means of a rod 41 developing substantially parallel to the stretcher 10, and is rigidly fixed thereto, so that the device is substantially cantilevered. Anyhow, in general, the connection means 4 will be such that it provides a connection of the propulsion means 2 to the stretcher 10 so as to create a thrust directed substantially in the direction of the axis E.

With reference to figure 4, it should be then noted that the stretcher 10 is normally fixed by a winch 5 to the helicopter 100, at a point which is substantially central to the surface of the stretcher 10 itself. As a consequence, during the motion of the stretcher 10, the latter could be easily subject to a rotation about a substantially vertical axis.

Thus, the thrust effect yielded by the propulsion means provided with the propeller 2 could be advantageously used in order to buck such rotation. In fact, as previously shown, such propulsion means 2 allows to yield a thrust along two opposed verses and, therefore, thanks to their position, to counterbalance incidental rotations of the stretcher about the above mentioned axis.

More in detail, the device 1 comprises a gyroscopic system 3, shown in figure 2, apt to sense such rotations of the stretcher 10 and operate the propeller 21 so as to keep the group formed by stretcher 10 and device 1 in a stable position.

In particular, it could be provided that the stretcher 10 remains stable relative to an axis substantially parallel to the one of longitudinal development of the helicopter 100, or to any axis, which is defined when the device 1 is operated.

The stabilization is therefore achieved automatically by the device which will operate the propulsion means 2 so as to rotate the propeller 21 in the verse required in order to yield a thrust sufficient to buck the rotation about the vertical axis defined by the winch 5 during the motion of the stretcher 10.

Above automatic operation, the use of remote control means, not shown in figure, could be also provided, allowing the operator to operate the stretcher 10 remotely. This operation will be particularly advantageous during recovery manoeuvres of the stretcher 10 which, in fact, could be oriented along the preferred direction. This opportunity is particularly useful in case of difficult manoeuvring of the stretcher 10 for the presence of obstacles, such as rocks or tree. This remote control means could be achieved e.g. by a control stick connected to a control board of the motor of the propeller 21. This connection could be also advantageously made by means of a wireless system.

The operation of the device 1 is therefore evident from the previous detailed description. In particular, during a rescue operation, the device could be activated as the person to be rescued is loaded on the stretcher 10 or during the approaching phase of the stretcher 10 towards the person to be rescued. Upon activation, the device 1 will permit to maintain the stretcher 10 in a predetermined stable position, defined e.g. by the longitudinal development of the helicopter or, if necessary, to control the orientation of the stretcher 10 until it is moved back to a position which is close to the cockpit of the helicopter 100.

Then, it should be noted that the device according to the present invention does not require any intervention on the winch 5 or, in general, on the helicopter 100, since it can be easily installed on any stretcher 10 for rescue. Therefore, this is feature makes the device particularly versatile and easy in its use. Moreover, the use of the device 1 does not require particular interventions by the operator, allowing the stretcher 10 to remain automatically in a stable position.

The present invention has hereto been described with reference to preferred embodiments thereof. It is understood that there could be other embodiments referable to the same inventive kernel, all falling within the protective scope of the claims set forth hereinafter.

## Claims

1. A stabilizing device (1) for stretchers (10), and suspended bodies in general, comprising propulsion means (2) and connection means (4) to said stretcher (10) or suspended body, **characterized in that** said propulsion means (2) are disposed so as to yield a thrust directed along a direction of an axis (E) substantially perpendicular to a longitudinal axis (B) of the stretcher (10).

2. The device (1) according to claim 1, further comprising a gyroscopic system (3) apt to operate said propulsion means (2) in response to a rotation movement of said stretcher (10) or suspended body, so as to generate a thrust apt to buck said rotation movement.

3. The device (1) according to any of the preceding claims, wherein said propulsion means (2) comprises a propeller (21).

4. The device (1) according to claim 3, wherein said propeller (21) is apt to operate about two senses of rotation, so as to generate said thrust along two directions opposed thereto.

5. The device (1) according to claim 3 or 4, wherein said axis (E) corresponds to the axis of rotation of said propeller (21).

6. The device (1) according any of claims 3 to 5, wherein said propeller (21) is housed within a cylindrical case (22).

7. The device (1) according to claim 6, wherein said cylindrical case (22) is open at respective bases (23a, 23b).

8. The device (1) according to claim 7, wherein said cylindrical case (22) comprises protective grates (23a, 23b) placed at respective bases of the case.

9. The device (1) according to any of claims 3 to 8, wherein said propeller (21) is operated by an electrical motor operated by a battery (24).

10. The device (1) according to any of the preceding claims, wherein said connection means (4) comprises a rod (41) apt to be disposed substantially parallel to the development direction of the stretcher (10).

11. The device (1) according to any of the preceding claims, wherein said propulsion means (2) are cantilevered to the stretcher (10) or to the suspended body.

12. The device (1) according to any of the preceding claims, further comprising remote control means, apt to operate said propulsion means (2) so as to generate a thrust apt to produce a rotation of the stretcher (10).

13. A rescue stretcher (10) **characterized by** the fact of comprising a stabilizing device (1) according to any of claims 1 a 12.
